Europäisches Patentamt

(19) European Patent Office

Office européen des brevets

(11) Numéro de publication : **0 076 223**
**B1**

(12) **FASCICULE DE BREVET EUROPÉEN**

(45) Date de publication du fascicule du brevet :
**17.07.85**

(51) Int. Cl.⁴ : **B 60 B   1/04**

(21) Numéro de dépôt : **82440028.7**

(22) Date de dépôt : **23.09.82**

(54) **Roue à rayons, en particulier pour bicyclettes, vélomoteurs, cyclomoteurs, véhicules automobiles, et autres.**

(30) Priorité : **24.09.81 FR 8118188**

(43) Date de publication de la demande :
**06.04.83 Bulletin 83/14**

(45) Mention de la délivrance du brevet :
**17.07.85 Bulletin 85/29**

(84) Etats contractants désignés :
**AT BE CH DE GB IT LI LU NL SE**

(56) Documents cités :
**DE-C-   105 037**

(73) Titulaire : **Marcellier, Robert**
**Le Kilbs**
**F-67210 Bischoffsheim (FR)**

(72) Inventeur : **Marcellier, Robert**
**Le Kilbs**
**F-67210 Bischoffsheim (FR)**

(74) Mandataire : **Nuss, Pierre**
**10, rue Jacques Kablé**
**F-67000 Strasbourg (FR)**

**EP 0 076 223 B1**

Jouve, 18, rue St-Denis, 75001 Paris, France

**Description**

La présente invention concerne le domaine de la fabrication de roues à rayons, en particulier pour bicyclettes, vélomoteurs, véhicules automobiles, et autres, et a pour objet une telle roue à rayons.

Actuellement, les roues à rayons existantes sont généralement constituées par une jante reliée au moyeu par l'intermédiaire de rayons fixés à intervalles réguliers, par leur pied sur les joues du moyeu, et pouvant être réglés en tension au moyen d'écrous montés sur la jante.

Toutefois, ces roues connues sont généralement surdimensionnées du fait de l'hyperstaticité de leur assemblage. En outre, le réglage de la tension des rayons ainsi que du centrage du moyeu est très difficile à réaliser, et les ruptures de rayon dues à des surtensions sont fréquentes. Enfin, le remplacement d'un rayon après rupture est une opération délicate à réaliser.

La présente invention a pour but de pallier ces inconvénients.

Elle a, en effet, pour objet une roue à rayons, en particulier pour bicyclettes, vélomoteurs, cyclomoteurs, véhicules automobiles et autres, constituée par des rayons de traction engagés dans les joues d'un moyeu par leur pied, caractérisée en ce que lesdits rayons sont attachés, par leur autre extrémité, à des sommets ou nœuds d'un profilé préformé en ligne brisée régulière ou irrégulière, continue ou discontinue, résistant uniquement à des efforts de traction, qui est relié par ses autres sommets à une jante, les écrous de rayon pour le réglage de la tension de ces derniers étant logés dans lesdits sommets ou nœuds éloignés de la jante.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

la figure 1 est une vue en élévation latérale d'une roue conforme à l'invention ;

la figure 2 est une vue en élévation latérale, à plus petite échelle, d'une variante de réalisation de la roue suivant la figure 1 ;

la figure 3 est une vue partielle en élévation latérale, à plus petite échelle, d'une autre variante de réalisation, et

la figure 4 est une vue partielle, à plus grande échelle, d'un profilé.

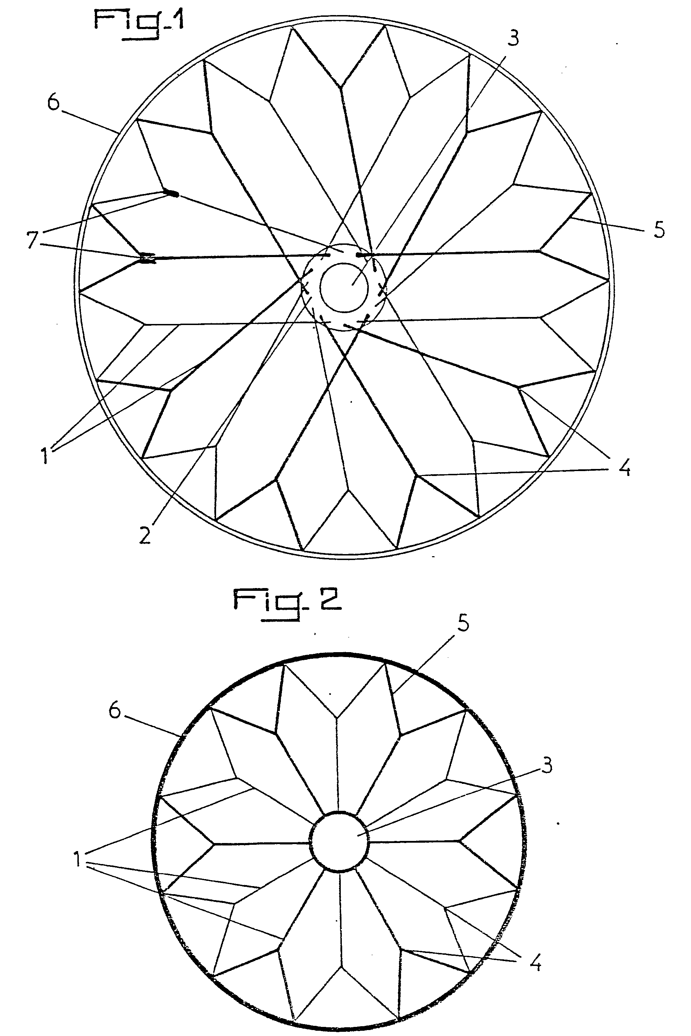

Conformément à l'invention, et comme le montre plus particulièrement, à titre d'exemple, la figure 1 des dessins annexés, la roue à rayons, en particulier pour bicyclettes, vélomoteurs, cyclomoteurs, véhicules automobiles, et autres, est essentiellement constituée par des rayons de traction 1 engagés, d'une part, par leur pied, dans les joues 2 d'un moyeu 3, et, d'autre part, attachés à des sommets ou nœuds 4 d'un profilé 5 préformé, en ligne brisée régulière ou irrégulière, continue ou discontinue, résistant uniquement à des efforts de traction, qui est relié par ses autres sommets à une jante 6, ces rayons étant réglés en tension au moyen d'écrous 7, qui sont logés dans les sommets ou nœuds 4 éloignés de la jante 6.

Pour une bonne compréhension des dessins, les rayons d'un côté de la roue sont en traits forts, ainsi que le profilé correspondant, et les rayons et le profilé de l'autre côté sont en traits fins.

Les rayons affectés à chaque joue 2 du moyeu 3 sont, de préférence, réunis en groupes de trois rayons dans lesquels deux rayons sont orientés dans le sens de la reprise des efforts d'entraînement et un autre est orienté en sens opposé (figures 1 et 3).

Le rayonnage de roues conformément à l'invention peut être réalisé, soit de manière droite (figure 2), tous les rayons s'étendant avantageusement suivant des lignes passant par le centre du moyeu 3, soit de manière croisée (figures 1 et 3), soit de manière hybride, non représentée, c'est-à-dire certains rayons étant croisés et d'autres étant droits, soit encore de manière mixte, en particulier pour une roue arrière, non représentée, les rayons du côté de la couronne dentée étant croisés, et ceux du côté opposé étant droits.

Le profilé 5 est avantageusement constitué par un fil, par un tube, par un feuillard, par un plat, ou encore un profilé d'une autre forme, et ses sommets de fixation à la jante 6 peuvent être, soit joints (figures 1 et 2), soit disjoints (figure 3), ce profilé 5 pouvant, en outre, être continu ou discontinu, c'est-à-dire ne former qu'un élément d'attache individuel pour chaque rayon 1 (figure 3).

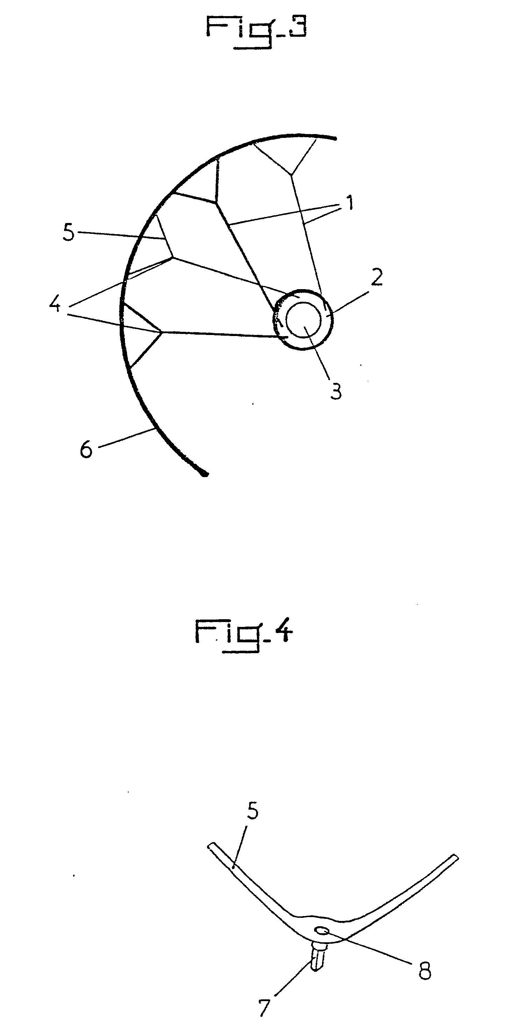

Comme le montre la figure 4, le profilé 5 est muni, au niveau de ses nœuds ou sommets 4, d'un perçage 8 pour le logement de l'écrou de rayon. Afin de réaliser un bon maintien de l'écrou 7 après serrage et réglage de la tension du rayon, ledit écrou 7 est maintenu sous traction par le profilé 5 grâce à un ceintrage préalable de ce dernier avant montage sur la jante 6.

Conformément à une caractéristique de l'invention, le profilé 5 est muni, à ses sommets servant à la fixation sur la jante 6, de boucles permettant un clavetage sur la jante, ou de perçages permettant un boulonnage ou un rivetage sur ladite jante 6.

Il est également possible, selon une autre caractéristique de l'invention, non représentée aux dessins annexés, de réaliser le profilé de fixation des rayons sur la jante par découpage et emboutissage de cette dernière de manière à former une suite de triangles dont les sommets servent au logement des écrous 7.

Selon une autre caractéristique de l'invention, il est également possible de monter les rayons 1 par leur pied dans les nœuds ou sommets 4 et d'engager leur écrou dans le moyeu 3.

Le mode de réalisation conforme à l'invention permet une réduction importante du nombre de rayon d'une roue, chaque extrémité de rayon étant dédoublée avant sa liaison avec la jante.

Cette technique est ainsi particulièrement intéressante dans le cas de roues de petit diamètre telles que les roues de véhicules automobiles.

Grâce à l'invention, il est possible de réaliser une roue à rayons, de montage rapide et aisée, de grande légèreté, et présentant une fiabilité accrue par rapport aux roues existantes. En outre, une telle roue présente une souplesse accrue par rapport aux roues connues ainsi qu'un meilleur dessin, et une possibilité de réglage plus simple et à la portée du novice.

Les rayons et le profilé en ligne brisée ne sont sollicités que par des efforts de traction variables, le dédoublement du rayon répartissant les efforts sur la jante et réduisant considérablement le risque de rupture.

Bien entendu, l'invention n'est pas limitée aux modes de réalisation décrits et représentés aux dessins annexés.

## Revendications

1. Roue à rayons, en particulier pour bicyclettes, vélomoteurs, cyclomoteurs et véhicules automobiles, constituée par des rayons de traction (1) engagés par leur pied, dans les joues (2) d'un moyeu (3), caractérisée en ce que lesdits rayons (1) sont attachés, par leur autre extrémité, à des sommets ou nœuds (4) d'un profilé (5) préformé, en ligne brisée régulière ou irrégulière, continue ou discontinue, résistant uniquement à des efforts de traction, qui est relié par ses autres sommets à une jante (6), ces rayons étant réglés en tension au moyen d'écrous (7), qui sont logés dans les sommets ou nœuds (4) éloignés de la jante (6).

2. Roue, suivant la revendication 1, caractérisée en ce que les rayons affectés à chaque joue (2) du moyeu (3), sont, de préférence réunis en groupes de trois rayons dans lesquels deux rayons sont orientés dans le sens de la reprise des efforts d'entraînement et un autre est orienté en sens opposé.

3. Roue, suivant l'une quelconque des revendications 1 et 2, caractérisée en ce que le rayonnage est réalisé, soit de manière droite, tous les rayons s'étendant avantageusement suivant des lignes passant par le centre du moyeu (3), soit de manière croisée, soit de manière hybride, c'est-à-dire certains rayons étant croisés et d'autres étant droits, soit encore de manière mixte, en particulier pour une roue arrière, les rayons du côté de la couronne dentée étant croisés, et ceux du côté opposé étant droits.

4. Roue, suivant la revendication 1, caractérisée en ce que le profilé (5) est avantageusement constitué par un fil, par un tube, par un feuillard, par un plat, ou encore un profilé d'une autre forme, et ses sommets de fixation à la jante (6) peuvent être, soit joints, soit disjoints, ce profilé (5) pouvant, en outre, être continu ou discontinu, c'est-à-dire ne former qu'un élément d'attache individuel pour chaque rayon (1).

5. Roue, suivant l'une quelconque des revendications 1 et 4, caractérisée en ce que le profilé (5) est muni, au niveau de ses nœuds ou sommets (4), c'un perçage (8) pour le logement de l'écrou de rayon.

6. Roue, suivant l'une quelconque des revendications 1, 4 et 5, caractérisée en ce que l'écrou (7) est maintenu sous trction par le profilé (5) grâce à un cintrage préalable de ce dernier avant montage sur la jante (6).

7. Roue, suivant l'une quelconque des revendications 1 et 4 à 6, caractérisée en ce que le profilé (5) est muni, à ses sommets servant à la fixation sur la jante (6), de boucles permettant un clavetage sur la jante, ou de perçages permettant un boulonnage ou un rivetage sur ladite jante (6).

8. Roue, suivant l'une quelconque des revendications 1 et 4 à 7, caractérisée en ce que le profilé (5) est réalisé par découpage et emboutissage de la jante de manière à former une suite de triangles dont les sommets servent au logement des écrous (7).

9. Roue, suivant la revendication 1, modifiée en ce que les rayons (1) sont montés par leur pied dans les nœuds ou sommets (4) et leur écrou est engagé dans le moyeu (3).

## Claims

1. Spoked wheel particularly for bicycles, mopeds, lightweight motorcycles and cars constituted by traction spokes (1) engaged at their bases in the flanges (2) of a hub (3), characterized in that said spokes (1) are attached by their other end to the tops or joints (4) of a section (5) preshaped, in regular or irregular, continuous or discontinuous, broken line form, resisting only tensile stresses, which is connected by its other tops to a rim (6), these spokes being tension-regulated by means of nuts (7), which are located in the tops or joints (4) remote from the rim (6).

2. Wheel, according to claim 1, characterized in that the spokes assigned to each flange (2) of the hub (3), are, preferably, combined in groups of three spokes in which two spokes are orientated in the driving stress take-up direction and the other is orientated in the opposite direction.

3. Wheel, according to either one of claims 1 and 2, characterized in that the spoke system is either straight, all the spokes extending advantageously along lines passing through the centre of the hub (3), or in crossed manner, or in hybrid manner, that is to say certain spokes being crossed and others being straight, or further in mixed manner, in particular for a rear wheel, the spokes on the side of the sprocket wheel being crossed and those on the opposite side being straight.

4. Wheel, according to claim 1, characterized in that the section (5) is advantageously constituted by a filament, by a tube, by a strip, by a plate, or further by a section of another form, and its tops for fixing to the rim (6) can be either jointed or disjointed, said section (5) can also be either continuous or discontinuous, that is to say forming only one individual attachment member for each spoke (1).

5. Wheel, according to either one of claims 1 and 4, characterized in that the section (5) is provided, level with its joints or tops (4), with a perforation (8) for housing the spoke nut.

6. Wheel, according to any one of claims 1, 4 and 5, characterized in that the nut (7) is kept under tension by the section (5) by bending the latter before fitting on the rim (6).

7. Wheel, according to any one of claims 1 and 4 to 6, characterized in that the section (5) is provided, at its tops for fixing on the rim (6), with rings permitting keying on the rim, or with perforations permitting bolting or riveting to the said rim (6).

8. Wheel, according to any one of claims 1 and 4 to 7, characterized in that the section (5) is formed by cutting and stamping the rim so as to form a series of triangles whose tops serve for housing the nuts (7).

9. Wheel, according to claim 1, modified in that the spokes (1) are fitted by their base in the joints or tops (4) and their nut is engaged in the hub (3).

**Patentansprüche**

1. Speichenrad, insbesondere für Fahrräder, Krafträder, Kleinkrafträder und Kraftfahrzeuge, bestehend aus Zugspeichen (1), die an ihrem unteren Ende in die Wangen (2) einer Nabe (3) eingesetzt sind, dadurch gekennzeichnet, dass die besagten Speichen (1) mit ihrem anderen Ende an Scheitel- oder Schnittpunkten (4) eines vorgeformten ausschliesslich Zugkräften unterworfenen Formstahls (5) in gebrochener, regelmässiger oder unregelmässiger, fortlaufender oder unterbrochener Linie befestigt sind, der über seine anderen Scheitelpunkte mit einer Felge (6) verbunden ist, wobei diese Speichen mit Hilfe von Radnippeln (7), die in von der Felge (6) entfernten Scheitel- oder Schnittpunkten (4) sitzen, nachgespannt werden.

2. Rad gemäss Anspruch 1, dadurch gekennzeichnet, dass die jeder Wange (2) der Nabe (3) zugeordneten Speichen vorzugsweise in Gruppen von je drei Speichen zusammenfefasst sind, bei welchen zwei Speichen in Richtung des Einsetzens der Antriebskräfte und eine andere in entgegengesetzter Richtung ausgerichtet sind.

3. Rad gemäss einem der Ansprüche 1 und 2, dadurch gekennzeichnet, dass die Verspeichung entweder geradlinig ausgeführt ist, wobei alle Speichen sich vorteilhafterweise auf Linien erstrecken, die durch das Zentrum der Nabe (3) verlaufen, oder kreuzweise, oder hybridartig, d. h. einige Speichen sind gekreuzt und andere gerade, oder auch gemischt, insbesondere bei einem Hinterrad, wobei die Speichen auf der Seite des Zahnkranzes gekreuzt sind und die der gegenüberliegenden Seite geräde verlaufen.

4. Rad gemäss Anspruch 1, dadurch gekennzeichnet, dass der Formstahl (5) vorteilhafterweise aus einem Draht, einem Rohr, einem Stahlband, einem Flachprofil oder auch aus einem anders geformten Profilstahl besteht, und seine Scheitelpunkte zur Befestigung an der Felge (6) entweder verbunden oder voneinander getrennt sind, wobei dieser Formstahl (5) ausserdem fortlaufend oder unterbrochen sein kann, d. h. nur ein einzelnes Befestigungselement für jede Speiche (1) bildet.

5. Rad gemäss einem der Ansprüche 1 und 4, dadurch gekennzeichnet, dass der Formstahl (5) in Höbe seiner Schnitt- oder Scheitelpunkte (4) mit einer Bohrung (8) für den Sitz des Speichennippels versehen ist.

6. Rad gemäss einem der Ansprüche 1, 4 und 5, dadurch gekennzeichnet dass der Radnippel (7) von dem Formstahl (5), durch vorheriges Krümmen des letzteren vor dem Montieren auf die Felge (6), auf Zug gehalten wird.

7. Rad gemäss einem der Ansprüche 1 und 4 bis 6, dadurch gekennzeichnet, dass der Formstahl (5) an seinen Scheitelpunkten, die zur Befestigung auf der Felge (6) dienen, mit Bügeln versehen ist, die ein Verkeilen auf der Felge ermöglichen, oder mit Bohrungen, die ein Verschrauben oder Vernieten auf der besagten Felge (6) erlauben.

8. Rad gemäss einem der Ansprüche 1 und 4 bis 7, dadurch gekennzeichnet, dass der Formstahl (5) durch Stanzen und Pressen der Felge hergestellt wird, um eine Aufeinanderfolge von Dreiecken zu bilden, deren Scheitelpunkte zur Unterbringung der Radnippel (7) dienen.

9. Rad gemäss Anspruch 1, darin abgeändert, dass die Speichen (1) an ihrem unteren Ende in den Schnitt- oder Scheitelpunkten (4) montiert sind un ihr Radnippel in die Nabe (3) eingesetzt ist.

0 076 223

Fig-1

Fig. 2

Fig.3

Fig.4